(19) Europäisches Patentamt
European Patent Office
Office européen des brevets

(11) **EP 3 814 263 B1**

(12) **EUROPEAN PATENT SPECIFICATION**

(45) Date of publication and mention
of the grant of the patent:
**13.11.2024 Bulletin 2024/46**

(21) Application number: **19730356.3**

(22) Date of filing: **13.06.2019**

(51) International Patent Classification (IPC):
**B66B 5/00** *(2006.01)*

(52) Cooperative Patent Classification (CPC):
**B66B 5/0006; B66B 5/0031;** B66B 5/0087

(86) International application number:
**PCT/EP2019/065503**

(87) International publication number:
**WO 2020/001992 (02.01.2020 Gazette 2020/01)**

(54) **METHOD AND ELEVATOR CONTROLLER FOR DETECTING A MALFUNCTION IN AN ELEVATOR**

VERFAHREN UND AUFZUGSSTEUERGERÄT ZUR ERKENNUNG EINER FEHLFUNKTION IN EINEM AUFZUG

PROCÉDÉ ET DISPOSITIF DE COMMANDE D'ASCENSEUR POUR DÉTECTER UNE DÉFAILLANCE DANS UN ASCENSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2018 EP 18180208**

(43) Date of publication of application:
**05.05.2021 Bulletin 2021/18**

(73) Proprietor: **INVENTIO AG**
**6052 Hergiswil (CH)**

(72) Inventors:
• **KUSSEROW, Martin**
**6005 Luzern (CH)**

• **ZHU, Zack**
**6340 Baar (CH)**

(74) Representative: **Inventio AG**
**Seestrasse 55**
**6052 Hergiswil (CH)**

(56) References cited:
**WO-A1-2009/126140      WO-A1-2016/091309**
**CN-A- 103 964 268      CN-A- 106 586 796**
**US-A1- 2018 086 597      US-A1- 2018 150 806**
**US-A1- 2018 332 368**

## Description

The present invention relates to a method for detecting a malfunction in an elevator. Particularly, the present invention relates to a method for detecting a temporary blockage of an elevator. Furthermore, the present invention relates to an elevator controller and a computer program product for executing or controlling the proposed method and to a computer readable medium comprising such computer program product stored thereon.

In many buildings having more than one floor, elevators serve for transporting passengers or goods vertically between the floors. During normal function of an elevator, the elevator may be called to come to a starting floor and may then be instructed to move to a destination floor.

However, due to for example malfunctions or defects, normal function of an elevator may be disturbed or interrupted. For example, an elevator may be blocked such that its cabin may no more move between the floors.

Conventionally, malfunction or particularly blockage of the elevator may be detected for example upon a user of the elevator detecting the malfunction or blockage and alerting for example a responsible person in a control centre.

However, in such conventional approach, the malfunction of the elevator is not recognised before the user of the elevator detects the malfunction and notifies the control centre. No proactive service is possible before a user realises the malfunction.

An alternative approach is described in KR 2017 0126821 A. Therein, an intercom unit of a sensor based intelligent emergency call system is proposed to automatically transmit an emergency call signal based on detection results of sensors such as a voice sensor, an impact detection sensor or an acceleration sensor even when a passenger does not press an emergency call. Specifically, in addition to an existing function that allows the passenger to press the emergency call button to notify of an emergency situation, the intercom unit of the present invention may immediately notify a security office or the like of an emergency situation occurring in an elevator car through sensor values of one or more among the mentioned sensors.

WO 2016/091309 A1 and WO 2009/ 126140A1 disclose systems for detecting a malfunction of an elevator based on measured data of this elevator.

However, it has been observed that in such alternative approach, an excessive number of false alarms may occur, each false alarm typically resulting in maintenance staff having to visit the elevator and check operation. Thereby, substantive additional work and costs may be generated.

There may be a need for an alternative method for detecting a malfunction in an observed elevator. Particularly, there may be a need for such method which allows proactive servicing of an elevator and/or minimising a number of false alarms. Furthermore, there may be a need for such method which requires no or only minimal further hardware to be provided in an elevator compared to conventional elevators. Additionally, there may be a need for an elevator controller and for a computer program product being configured for implementing the proposed method as well as for a computer readable medium comprising such computer program product stored thereon.

Such needs may be met with the subject-matter of the independent claims. Advantageous embodiments are defined in the dependent claims and in the following specification.

According to a first aspect of the present invention, a method for detecting a malfunction in an observed elevator is described. The method is executed, performed and/or controlled by an elevator controller comprising a data processor and a data acquisition interface. The method comprises at least the following steps, preferably in the indicated order:

> acquiring first data during an application phase, the first data correlating with at least one condition in the observed elevator;
> acquiring further data during the application phase, the further data correlating with the at least one condition in other elevators;
> determining a current relative behaviour of the observed elevator during the application phase based on a comparison of the first data with the further data;
> detecting the malfunction in the observed elevator based on an analysis of the current relative behaviour.

According to a second aspect of the invention, an elevator controller comprising a data processor and a data acquisition interface is described. The elevator controller is configured to executing, performing or controlling a method according to an embodiment of the first aspect of the invention.

According to a third aspect of the invention, a computer program product is described to comprise computer readable instructions which, when performed by a processor of an elevator controller, instruct the elevator controller to one of executing, performing and controlling a method according to an embodiment of the first aspect of the invention.

According to a fourth aspect of the invention, a computer readable medium comprising a computer program product according to an embodiment of the third aspect of the invention stored thereon is proposed.

Ideas underlying embodiments of the present invention may be interpreted as being based, inter alia, on the following observations and recognitions.

As briefly indicated in the introductory portion, technical approaches have been proposed for detecting malfunctions in an elevator in order to avoid that such malfunctions may only be detected upon a passenger trying to use the defective elevator. In such prior art approaches, sensors supervising conditions in an elevator were used in order to obtain information about current conditions of the elevator and to enable determining specific malfunctions in the elevator.

However, in such prior art approaches, typically only the signals of sensors supervising conditions in a single elevator where used in order to determine the current conditions of this single observed elevator.

It has now been realised that in such prior art approaches, an excessive number of false alarms may occur. Such false alarms may be issued for example when conditions occur in the observed elevator which have similar characteristics as occurring upon malfunctions of the observed elevator but these conditions do not result from any malfunctions but for other reasons.

For example, in prior art approaches, a malfunction in the observed elevator may have been assumed in situations where the elevator cabin did not move for more than a predetermined time interval. Specifically, such lacking motion may have been interpreted as indicating an elevator blockage. However, the lacking motion may be the result of other conditions.

For example, an elevator installed in a public building such as a school or a shopping centre may not be used during long time intervals at weekends. Such long-term lacking use of the elevator may be misinterpreted as indicating a malfunction.

In order to reduce a likelihood of such misinterpretations, it is therefore proposed herein to detect a malfunction in an observed elevator not only based on the actual behaviour or conditions within this observed elevator but to correlate the behaviour of the observed elevator with the actual behaviour of other elevators. Such correlated behaviour is referred to herein as "relative behaviour".

By analysing the current relative behaviour of an observed elevator taking into account the current behaviour of other elevators, situations in which the current behaviour of the observed elevator is affected not due to a malfunction of this observed elevator but due to conditions which also affect the other elevators may be recognised. Accordingly, a likelihood of false alarms may be reduced.

In the following, an embodiment of the method proposed herein will be described in relation to an example in which the malfunction to be detected is a temporary blockage of the observed elevator. Such temporary blockage may result in an elevator for various reasons and may affect conditions of the elevator in various ways. A most obvious affected condition is that the elevator cabin may no more move between the floors in the building. Accordingly, such type of malfunction essentially eliminates the purpose of the elevator. However, it shall be noted that the proposed method may also be used for detecting other malfunctions in an observed elevator, such other malfunctions not necessarily completely preventing a use of the elevator but limiting a use or disturbing a use of the elevator.

In order to determine the current relative behaviour of the observed elevator, first data is acquired during an application phase. These first data shall correlate with at least one condition in the observed elevator. In the example of detecting a blockage of the observed elevator, the first data shall correlate with at least one condition of the observed elevator being affected by the temporary blockage of the observed elevator.

Furthermore, further data is acquired during the application phase. These further data shall correlate with the at least one condition in other elevators. In other words, the further data shall represent characteristics of the same one or more condition to which the first data correlate in the observed elevator, but this condition prevailing not in the observed elevator but in one of the other elevators. Accordingly, in the example of detecting a blockage in the observed elevator, the further data shall correlate with the at least one condition in each of multiple other elevators wherein the condition is affected by the temporary blockage of the respective other elevator.

The further data may be acquired simultaneously with the first data. Alternatively, the further data may be acquired within a common time interval together with the first data. The common time interval may be set such that the conditions within the observed elevator as represented by the first data, on the one hand, and the conditions within the other elevator as represented by the further data, on the other hand, may be compared in a meaningful manner. Accordingly, a length of the common time interval may be selected in dependence of characteristics of the observed condition. For example, the common time interval may, in some cases, be shorter than one minute whereas, in other cases, the common time interval may be as long as one or even several hours.

According to an embodiment, the first data is generated based on signals provided by sensors comprised in the observed elevator and the further data is generated based on signals provided by sensors comprised in the other elevators.

In other words, both, the first data and the further data may be acquired from sensors provided in the respective observed elevator and other elevators, these sensors issuing the data in the form of sensor signals. Such sensors may measure parameters which correlate to conditions currently prevailing in the respective elevator. Accordingly, the first data and the further data may be acquired based on such current sensor measurements. Various sensors may be applied in the observed elevator as well as in the other elevators, for example in or at the elevator cabin and/or at various locations or components throughout the entire elevator arrangement. The sensors may measure or detect physical parameters correlating to local conditions within the elevator.

For example, according to an embodiment, the first data and the further data correlate to

- a number of door motions occurring during a time interval,

- a number of elevator trips occurring during a time interval,
- a change in cabin occupancy occurring during a time interval,
- distances travelled during a time interval,
- an amount of time passed since a last trip, and/or
- an amount of time passed since a last door motion.

For example, information about motions such as an opening motion or a closing motion of elevator doors may be acquired. The elevator door may be an elevator cabin door or an elevator shaft door. The information may be obtained from a sensor observing a respective elevator door. For example, mechanical sensors, electric sensors, magnetic sensors, inductive sensors, optical sensors or various other sensors may be actuated upon any door motion occurring. Additionally or alternatively, the information about the door motion may be obtained from an elevator control unit controlling the respective elevator door. Accordingly, a number of motions of the respective elevator door during a given time interval may be counted. Furthermore, an amount of time which has passed since the respective elevator door has been moved for the last time may be determined. Each such information may correlate with conditions within the respective elevator and may therefore be taken as the first or further data, respectively, or as part of the first or further data, respectively.

Additionally or alternatively, an information about whether an elevator cabin performs a trip may be acquired. For example, sensors within an elevator shaft may detect the presence of the elevator cabin and/or a passing-by of the elevator cabin. Again, various types of different sensors may be applied for such purpose. Additionally or alternatively, the information about an elevator trip may be obtained from the elevator control unit. Optionally, an information about a distance travelled by the elevator cabin may be acquired. Accordingly, a number of elevator trips of a respective elevator cabin during a given time interval may be counted. Furthermore, an amount of time which has passed since a last trip may be determined. As a further alternative, distances travelled by the elevator cabin during a given time interval may be determined. Again, each such information may correlate with conditions within the respective elevator and may therefore be taken as the first or further data, respectively, or as part of the first or further data, respectively.

As a further alternative or supplement, an information about a current load in the elevator cabin may be acquired. For example, a sensor connected to the bottom of the elevator cabin may sense a weight acting onto this bottom. Alternatively, sensors may sense loads acting on ropes holding the elevator cabin. As a further alternative, a load in the elevator cabin may be determined based on characteristics of an elevator engine upon moving the elevator cabin. Further alternatives for determining the current load of the elevator cabin may be used.

The information about the current load of the elevator cabin generally corresponds to information about a cabin occupancy. Cabin occupancy and, particularly, information about changes in such cabin occupancy typically correlate with conditions within the respective elevator and may therefore also be taken as the first or further data, respectively, or as part of the first or further data, respectively.

It shall be noted that the first and further data, respectively, may also correlate to other conditions or parameters and may be acquired based on signals provided for example by other sensors. Generally, the method described herein may be agnostic to the specific type of first and further data as long as these data somehow correlate with a condition in the respective elevator which condition is affected by the malfunction to be detected.

According to an embodiment, additionally to the current relative behaviour of the observed elevator during the application phase, a relative behaviour of the observed elevator may be determined in a learning phase preceding the application phase. Such relative behaviour of the observed elevator during the learning phase may for example be determined during a long period of time and may be assumed to represent normal operation of the elevator. Accordingly, such relative behaviour is referred to herein as "normal relative behaviour". The normal relative behaviour may be determined by

(i) acquiring first data during the learning phase, the first data correlating with the at least one condition in the observed elevator;
(ii) acquiring further data during the learning phase, the further data correlating with the at least one condition in other elevators; and
(iii) determining the normal relative behaviour of the observed elevator during the learning phase based on a comparison of the first data with the further data.

Accordingly, the normal relative behaviour may be determined in a similar way as the above described determining of the current relative behaviour, but the determination of the normal relative behaviour is executed during the learning phase, i.e. prior to determining the current relative behaviour in the application phase. In other words, the normal relative behaviour may be learned in the learning phase in a machine learning procedure. Then, in the subsequent application phase, the step of detecting the malfunction in the observed elevator may include an analysis not only of the current relative behaviour but an analysis of the current relative behaviour in comparison with the normal relative behaviour.

Expressed in different words, the current behaviour of the observed elevator may not only be compared to the current behaviour of the other elevators in an analysis of the current relative behaviour but, additionally, such current relative behaviour may also be compared to the normal relative behaviour as learned in the preceding learning phase.

Accordingly, it could for example be recognised when the current behaviour of the observed elevator significantly deviates from the current behaviour of the other elevators. This, in general, could indicate a malfunction in the observed elevator. However, there may also be situations in which such deviation of the current behaviour of the observed elevator is within a normal range of acceptable behaviours. Such circumstances may be determined based on the comparison with the normal relative behaviour as learned in the preceding learning phase.

Explained with reference to the example briefly described further above, several elevators comprised in a school may change their current behaviour during weekends as the school and its elevators are not used during weekends.

By comparing the current behaviour of an observed elevator only with its preceding behaviour, such change in current behaviour could be interpreted as indicating a malfunction. However, by analysing the current behaviour relative to the behaviour of the other elevators in the school, it may become apparent that such change in current behaviour may be acceptable and may not indicate any malfunction as the change in current behaviour of the observed elevator coincides with a similar change in current behaviour of the other elevators such that no or only a minor change in the current relative behaviour is given.

In another situation, when in this example the current behaviour of the observed elevator suddenly changes during normal school days, this may indicate a malfunction of the observed elevator. However, even in such situation, the change in current behaviour may be acceptable and may not indicate any malfunction. For example, the observed elevator is hardly used on Fridays as on Fridays classes located in the part of the school building served by the observed elevator do have sports lessons and do therefore not use the observed elevator for accessing their classrooms. Such extraordinary situations may be learned in the machine learning procedure during the learning phase.

Accordingly, upon additionally comparing the current relative behaviour of the observed elevator with the previously learned normal relative behaviour, such extraordinary situations may be recognised and issuing of a false alarm may be suppressed.

According to an embodiment, the further data is acquired in other elevators which have previously been determined to have a certain similarity to the observed elevator.

In other words, when there are multiple elevators and data correlating with functions of the elevators are available for each of these multiple elevators, it may be beneficial to, in the proposed method, not use the further data acquired for all of these multiple elevators. Instead, it may be beneficial to select those elevators from a pool of accessible multiple elevators which have a certain similarity to the observed elevator. Therein, the observed elevator and the other elevators may be assumed to have a certain similarity in case, under normal conditions, they show a similar behaviour.

For example, elevators being installed close to each other in a same building and/or elevators serving for a same or similar purpose may have a sufficient similarity.

Taking into account only further data from other elevators having a specific similarity to the observed elevator may help in avoiding false alarms upon detecting the malfunction in the observed elevator.

According to an embodiment, the similarity between the observed elevator and one of the other elevators is determined in a learning phase preceding the application phase, which application phase includes the detecting the malfunction in the observed elevator.

In other words, whether or not the observed elevator and one of the other elevators may be interpreted as having a sufficient similarity may be determined during the learning phase. For example, in this learning phase, the behaviour of the observed elevator and the behaviour of the other elevator may be compared and if both behaviours are similar to a certain extent, these two elevators may be accepted as having the sufficient similarity.

According to an embodiment, the similarity between the observed elevator and one of the other elevators is determined based upon

- information relating to a physical distance between the observed elevator and the other elevator,
- information relating to an application of the observed elevator and the other elevator, and/or
- information relating to a temporal segment in which the first data and the further data is acquired.

Expressed differently, whether or not the observed elevator and the other elevator have a sufficient similarity may be determined based on various factors.

For example, a distance between both elevators may correlate with the similarity between these elevators. For example, elevators within a same building may have a similar use profile, i.e. there may be a similarity between these elevators as the people moving within the same building may use both elevators in a similar way. This may be particularly true if the two elevators are located in close proximity within the building. However, even between elevators located in different buildings, there may be a degree of similarity. For example, in a large multiplicity of elevators being located throughout various countries or regions, those elevators being installed in a same country or same region may have a degree of similarity. For example, when there is a public holiday in a first country but no such holiday in a neighbouring second country, elevators in the first country might experience a different current behaviour compared to normal working days. Accordingly, by limiting the determination of the relative current behaviour to those elevators comprised in a close proximity or in the same country or region, false alarms may be avoided.

As another example, information about an application of an elevator may be taken into account upon determining whether it is similar to another elevator or not. Therein, the application may for example correlate to the purpose of the elevator as determined for example by the type of building in which the elevator is located. For example, all elevators located in schools may be interpreted as having a same application and may be determined as showing sufficient similarity as their behaviour may be similar due to for example school schedules and/or school holidays influencing elevator usage in a similar way at all of these schools. Similarly, all elevators located in shopping centres may be interpreted as having a same application as, generally, passenger traffic in such shopping centres may similarly depend on times of the day and therefore elevator usage may behave similar throughout all of these shopping centres.

As a further example, information about a temporal segment, i.e. about a period of time, in which the first and further data is acquired may be taken into account upon determining whether an elevator is similar to another elevator or not. For example, when the behaviour of elevators in schools is compared during a learning phase of only two weeks, elevators in schools located in different countries or regions may be taken as showing a sufficient similarity when both schools are used in a similar way due to holidays applying to both schools during these two weeks. However, on a longer timescale, i.e. when the behaviour of the elevators is not compared only during holidays but also during normal school times, both elevators in the different schools may behave very differently and may not show sufficient similarity.

According to an embodiment, the method is executed in an elevator controller receiving

- sensor data acquired by a multiplicity of sensors distributed throughout the observed elevator and a multiplicity of the other elevators, and/or
- control data generated in an elevator control unit of the observed elevator and control data generated in an elevator control unit of a multiplicity of the other elevators.

In other words, the elevator controller may monitor, supervise and/or control operation of a multiplicity of elevators including the elevator to be observed and the other elevators. For example, the elevator controller may be part of a remote control centre in which operation of a large variety of elevators throughout multiple buildings or even throughout multiple areas or countries may be monitored. The method proposed herein may then be executed in such elevator controller.

For such purpose, the elevator controller may acquire sensor data acquired by a multiplicity of sensors. The sensors may be distributed throughout both, the observed elevator and the other elevators. Various different types of sensors may be applied as indicated further above.

Additionally or alternatively, the elevator controller may acquire control data generated in a control unit of the observed elevator and the other elevators, respectively. Such control unit controls the operation of the respective elevator and may therefore provide control data which correlate with the at least one function in the observed elevator and the other elevators, respectively. Accordingly, such control data may be used as first and further data in the proposed method.

When a malfunction in the observed elevator is detected using the method described herein, such information may be used for example for alerting service staff such that the malfunction may be repaired. Accordingly, in a best scenario, malfunctions may be detected automatically and may be repaired before any customers are negatively affected. On the other side, false alerting of service staff may be minimised with the method proposed herein.

Embodiments of the method proposed herein may be executed, performed or controlled in an elevator controller. For such purpose, the elevator controller may comprise a data processor and a data acquisition interface. The data processor may process data acquired via the data acquisition interface. Particularly, the data processor may process data which serve as first data and further data in the method proposed herein. Such data may be acquired via the data acquisition interface using for example hardwiring between the elevator controller and the elevators and their sensors and/or elevator control units, respectively. Alternatively or additionally, wireless data transmission may be applied.

The proposed method may be implemented using hardware, software or a combination of both. Particularly, the computer program product proposed herein may comprise computer readable instructions instructing the processor of the elevator controller such as to execute, perform or control the proposed method. Therein, the computer program product may be programmed in any suitable computer language. Furthermore, the computer program product may be stored on any suitable computer readable medium such as for example a CD, a DVD, a flash memory, etc. Alternatively, the computer program product may be stored on a computer or server from which it may be downloaded via a network such as the Internet.

It shall be noted that possible features and advantages of embodiments of the invention are described herein partly with respect to a method for detecting a malfunction in an observed elevator and partly with respect to an elevator controller configured for implementing such method. One skilled in the art will recognize that the features may be suitably transferred from one embodiment to another and features may be modified, adapted, combined and/or replaced, etc. in order to come to further embodiments of the invention.

In the following, advantageous embodiments of the invention will be described with reference to the enclosed drawings. However, neither the drawings nor the description shall be interpreted as limiting the invention.

Fig. 1 shows an arrangement of multiple elevators in which malfunctions may be detected with a method in accordance with the present invention.

Fig. 2 shows a flowchart of a possible implementation of a method in accordance with the present invention.

The figures are only schematic and not to scale. Same reference signs refer to same or similar features.

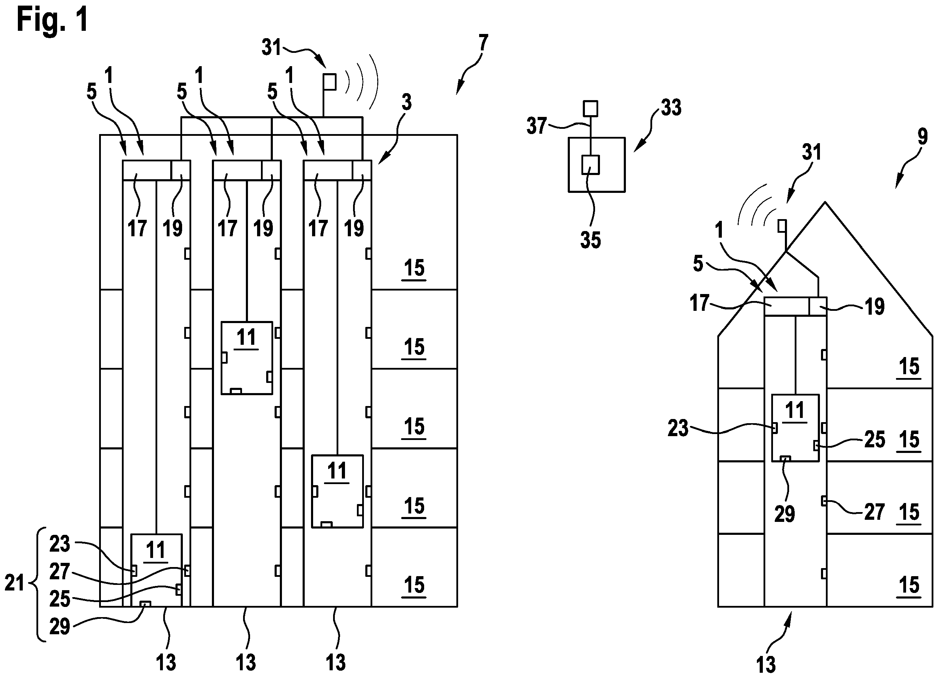

Fig. 1 shows an arrangement of several elevators 1 including an observed elevator 3 and several other elevators 5 in a first building 7 and a second building 9. Each elevator 1 comprises an elevator cabin 11 which may be moved throughout an elevator shaft 13 such as to be accessible from various floors 15. Each of the elevator cabins 11 is displaced using a drive unit 17 controlled by a control unit 19.

In each of the elevators 1, a multiplicity of sensors 21 is provided for measuring parameters relating to various physical conditions. For example, a door motion sensor 23 may measure parameters which may change upon a cabin door or a shaft door being opened and/or closed. An acceleration sensor 25 may measure accelerations acting onto the elevator cabin 11. A position sensor 27 may measure a current position of the elevator cabin 11 throughout the elevator shaft 13. A cabin load sensor 29 may measure a load currently acting onto the elevator cabin 11 thereby allowing indirectly determining changes in cabin occupancy.

Signals provided by the sensors 21 or data correlating therewith may be transmitted from each of the elevators 1 via transmitters 31 towards a central elevator controller 33. Such central elevator controller 33 may be located in a remote control centre being far away from the buildings 7, 9. The central elevator controller 33 may comprise a data acquisition interface 37 for receiving the signals or data transmitted by the transmitters 31. Furthermore, the central elevator controller 33 comprises a data processor 35 for processing the data received via the data acquisition interface 37.

The central elevator controller 33 may execute or control a method for detecting a malfunction in the observed elevator 3 in accordance with an embodiment of the present invention.

For such purpose, first data correlating with at least one condition in the observed elevator 3 may be acquired during an application phase. For example, such first data may be derived from signals of one or more of the sensors 21. Particularly, first data may be derived from signals of one or more sensors 21 supervising conditions which are influenced upon occurrence of the malfunction to be detected, i.e. for example supervising conditions which are influenced upon occurring of a blockage of the observed elevator 3.

Furthermore, further data is acquired during the application phase, such further data also relating to the same one condition as supervised in the observed elevator 3 but prevailing in one of the other elevators 5. For example, such further data may be derived from signals of one or more sensors 21 supervising conditions which are influenced upon the same type of malfunction to be detected, i.e. for example supervising conditions which are influenced upon occurrence of a blockage in the other elevator 5.

Subsequently, based on the acquired first data and further data and processing these first and further data in the data processor 35, the elevator controller 33 determines a current relative behaviour of the observed elevator 3 during the application phase based on a comparison of the first data with the further data.

Finally, based on an analysis of the current relative behaviour, the malfunction in the observed elevator 3 may be detected.

In a preferred embodiment, not only the current relative behaviour of the observed elevator 3 is analysed, but also a normal relative behaviour of this observed elevator 3 is taken into account upon detecting the malfunction in the observed elevator 3. For such purpose, the normal relative behaviour is determined in a machine learning procedure during a learning phase. In principle, the normal relative behaviour is determined using a similar procedure as used for determining the current relative behaviour but based on first and further data acquired during the learning phase instead of the application phase.

Furthermore, in a preferred embodiment, only the further data acquired in other elevators 5 having previously been determined to have a certain similarity to the observed elevator 3 are taken into account upon determining the current relative behaviour of the observed elevator 3.

For example, other elevators 5 being located in the same first building 7 as the observed elevator 3 may be assumed to have a sufficient similarity to the observed elevator 3 as an elevator usage profile throughout the same first building 7 may be assumed to be similar for all of the elevators 1 comprised in this first building 7.

Overall, a system is proposed which may learn regular operational behaviour of an observed elevator 3 from its deviance with respect to other elevators 5 for example located nearby and/or having another type of similarity with respect to the observed elevator 3.

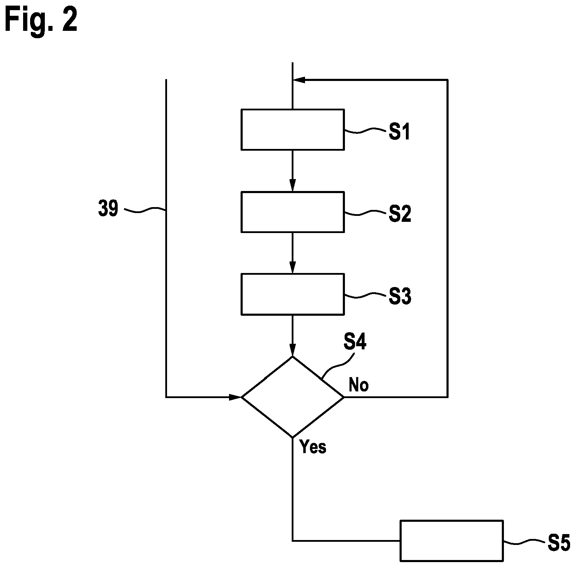

Subsequently, a specific implementation of an embodiment of the method for detecting a malfunction in the observed elevator 3 will be explained with reference to the flowchart shown in Fig. 2.

Roughly summarised, such embodiment may comprise five steps. In a first step S1, a time series between elevator installations may be correlated. A pairwise correlation matrix resulting therefrom may then be processed in a second step S2 in which basis elevators are selected based on for example correlation threshold. Resulting from such second step, clusters of semantically related elevator installations are used in a third step S3 for deriving a differential model between semantic neighbours. Two other possible ways to select clusters of semantically related elevator installations used in the third step are by similar physical distance (e.g. elevators in the same building) or by activation time (e.g. elevators operating during the same time periods like 9-5 on workdays). Upon learning the relationship of the observed elevator installation as related to basis elevators during a learning phase, the observed elevator may be monitored and malfunctions may be detected based on a maximum differential tolerance. For such purpose, in a fourth step S4, it is then decided whether or not a malfunction such as a blockage of the elevator is present in the observed elevator. For such blockage decision, first and further current data 39 and a current relative behaviour of the observed elevator 3 derived therefrom may be compared with data representing a normal relative behaviour of the observed elevator 3 as determined during the learning phase. If, in such decision step, a blockage of the observed elevator 3 is detected, service staff may be alerted in a final step S5 or other actions for overcoming the detected malfunctions may be initiated.

In a specific example of this embodiment, in the first step S 1, multi-dimensional signals may be given for all elevator installations in a fleet. A pairwise correlation matrix may then be sought, where entries of such correlation matrix depict a correlation in the input signals for pairs of elevator installations in a portfolio.

A calculation of a calculation metric may be determined by a practitioner, e.g. Spearman's rho may be applied for rank based correlation.

Furthermore, multi-dimensional input signals may be first projected onto a lower-dimensional space (e.g. a single dimensional time series) before calculating the correlation matrix, applying for example Principle Component Analysis.

Then, in the second step S2, for the whole portfolio of elevator installations, elevator installations may be clustered into "semantically similar" groups. Parameters for clustering such installations may depend on the practitioner's choosing. For example, physical distance between elevator installations (e.g. within one building, one city block, etc.) may be chosen. Alternatively or additionally, existing semantic grouping of buildings (e.g. groups installations of different hotel/hospital/school buildings) may be chosen. As a further alternative or supplement, a temporal segment in which to compare the correlation threshold (e.g. only correlation of input signals from the last 4 weeks are considered) may be chosen.

Subsequently, in the third step S3, given installations within one semantic cluster, a differential baseline is constructed by subtracting each elevator installation's input signals from a weighted average of the other elevator installation's input signals. The weighting may be given by the semantic similarity of installations defined in Step S2.

As such, the differential baseline of each installation i.e may be calculated as:

$$D_i = \frac{1}{len(S) - 1} \sum_j w_{i,j} * M_j \ \forall j \neq i \in S$$

where $D_i$ is the differential baseline for installation i; S is the set of installations belonging to the same semantic cluster; $w_{i,j}$ is the semantic similarity between installation i and j; $M_j$ is the matrix of input signals where the columns are the different signal types and the rows are mapped semantic time periods (e.g. hour 0 of a weekday, hour 1 of a weekday, ... hour 23 of a weekday, hour 0 of a weekend day, hour 1 of a weekend day...).

Additionally, there are many other possible ways to calculate a differential baseline of each installation.

It is to be noted that semantically meaningful time periods may be used to aggregate absolute time in the training period. The specific aggregation method and interval of aggregation remains a choice of the practitioner (e.g. averages of hourly time bins for weekdays and weekend days).

For each installation, a model may be learned from the 'normal' behaviour of the differential baseline using standard anomaly detection methods, e.g. One-Class Support Vector Machines. These models may learn from a matrix of data ($D_i$) to define a 'normal' space of operations. In this context, the historical differential baseline provided by $D_i$ characterizes how a specific installation operates with respect to other semantically related installations.

Finally, having trained the model, it may be applied on current data. The blockage estimation step requires that current data is processed the same way as the training data to derive differential vectors. These differential vectors may then be fed to the anomaly detection model to determine whether the vector is anomalous or not. If anomalous, operations personnel may be notified. Otherwise, the data may be transferred back into the training pipeline as additional training data for continuous model updates.

Briefly summarised, embodiments of the present invention allow overcoming shortcomings of conventional approaches for detecting malfunctions in an elevator. Particularly, it may no more be necessary that a customer complaint has to trigger a call-back and/or a site visit upon a malfunction occurring in an elevator. Instead, the approach proposed herein allows automatically detecting malfunctions such as blockage in an elevator with a low probability of false alarms. Particularly, the proposed approach is less susceptible to false positives (false alarms) that may arise from the examination of single installations. For example, lack of operation of a specific elevator at the beginning of a school day would not raise a blockage alert if all elevators in the building are also lacking in operation. Provisioning and consideration of operational rules may be significantly reduced or minimized as blockage detection may be based on relative behaviour of installations against its neighbours. An unsupervised approach may eliminate a need for manual labelling of blockage scenarios. A solution may be independent of an input signal source / automatic pruning of irrelevant input signals. The present approach may enable a proactive service call before customer realize a malfunction. Furthermore, the present approach may be applicable in modernization or NI installations where additional sensing hardware is deployed without connection to a shaft information system or elevator control unit.

Finally, it should be noted that the term "comprising" does not exclude other elements or steps and the "a" or "an" does not exclude a plurality. Also, elements described in association with different embodiments may be combined. It should also be noted that reference signs in the claims should not be construed as limiting the scope of the claims.

## Claims

1. Method for detecting a malfunction in an observed elevator (3) and being executed, performed and/or controlled by an elevator controller (33) comprising a data processor (35) and a data acquisition interface (37), the method comprising:

   acquiring first data during an application phase, the first data correlating with at least one condition in the observed elevator (3);
   acquiring further data during the application phase, the further data correlating with the at least one condition in other elevators (5);
   **characterized in that** the method comprises the further steps:

   determining a current relative behaviour of the observed elevator (3) during the application phase based on a comparison of the first data with the further data; and
   detecting the malfunction in the observed elevator (3) based on an analysis of the current relative behaviour.

2. Method of claim 1, wherein the malfunction to be detected is a temporary blockage of the observed elevator (3) and wherein the first data and the further data correlate to conditions of an elevator being affected by the temporary blockage of the elevator.

3. Method of one of the preceding claims, wherein a normal relative behaviour of the observed elevator (3) is determined in a learning phase preceding the application phase by

   acquiring first data during the learning phase, the first data correlating with the at least one condition in the observed elevator (3);
   acquiring further data during the learning phase, the further data correlating with the at least one condition in other elevators (5); and
   determining the normal relative behaviour of the observed elevator during the learning phase based on a comparison of the first data with the further data acquired during the learning phase;

   wherein the detecting the malfunction in the observed elevator (3) includes an analysis of the current relative behaviour in comparison with the normal relative behaviour.

4. Method of one of the preceding claims, wherein the further data is acquired in other elevators (5) which have previously been determined to have a certain similarity to the observed elevator (3).

5. Method of claim 4, wherein the similarity between the observed elevator (3) and one of the other elevators (5) is determined in a learning phase preceding the application phase including the detecting the malfunction in the observed elevator (3).

6. Method of claim 5, wherein the similarity between the observed elevator (3) and one of the other elevators (5) is determined based upon at least one of

   - information relating to a physical distance between the observed elevator (3) and the other elevator (5),
   - information relating to an application of the observed elevator (3) and the other elevator (5), and
   - information relating to a temporal segment in which the first data and the further data is acquired.

7. Method of one of the preceding claims, wherein the first data is generated based on signals provided by sensors (21) comprised in the observed elevator (3) and the further data is generated based on signals provided by sensors (21) comprised in the other elevators (5).

8. Method of one of the preceding claims, wherein the first data and the further data correlate to at least one of

   - a number of door motions occurring during a time interval,
   - a number of elevator trips occurring during a time interval,
   - a change in cabin occupancy occurring during a time interval,
   - distances travelled during a time interval,

- an amount of time passed since a last trip, and
- an amount of time passed since a last door motion.

9. Method of one of the preceding claims, wherein the method is executed in an elevator controller (33) receiving at least one of

- sensor data acquired by a multiplicity of sensors (21) distributed throughout the observed elevator (3) and a multiplicity of the other elevators (5),
- control data generated in an elevator control unit (19) of the observed elevator (3) and control data generated in an elevator control unit (19) of at least one of a multiplicity of the other elevators (5).

10. Elevator controller (33) comprising a data processor (35) and a data acquisition interface (37) and being configured to one of executing, performing and controlling a method according to one of the preceding claims.

11. Computer program product comprising computer readable instructions which, when performed by a processor (35) of an elevator controller (33), instruct the elevator controller (33) to one of executing, performing and controlling a method according to one of claims 1 to 9.

12. Computer readable medium comprising a computer program product according to claim 11 stored thereon.


**Patentansprüche**

1. Verfahren zum Erkennen einer Fehlfunktion in einem überwachten Aufzug (3), das durch eine Aufzugssteuerung (33) ausgeführt, durchgeführt und/oder gesteuert wird, umfassend einen Datenprozessor (35) und eine Datenerfassungsschnittstelle (37), das Verfahren umfassend:

Erfassen erster Daten während einer Einsatzphase, wobei die ersten Daten mit mindestens einem Zustand in dem überwachten Aufzug (3) korrelieren;
Erfassen weiterer Daten während der Einsatzphase, wobei die weiteren Daten mit dem mindestens einen Zustand in anderen Aufzügen (5) korrelieren;
**dadurch gekennzeichnet, dass** das Verfahren die weiteren Schritte umfasst:
Bestimmen eines aktuellen relativen Verhaltens des überwachten Aufzugs (3) während der Einsatzphase basierend auf einem Vergleich der ersten Daten mit den weiteren Daten; und Erkennen der Fehlfunktion in dem überwachten Aufzug (3) basierend auf einer Analyse des aktuellen relativen Verhaltens.

2. Verfahren nach Anspruch 1, wobei es sich bei der zu erkennenden Fehlfunktion um eine vorübergehende Blockierung des überwachten Aufzugs (3) handelt, und wobei die ersten Daten und die weiteren Daten mit Zuständen eines Aufzugs korrelieren, die von der vorübergehenden Blockierung des Aufzugs betroffen sind.

3. Verfahren nach einem der vorstehenden Ansprüche, wobei ein normales relatives Verhalten des überwachten Aufzugs (3) in einer Lernphase, die der Einsatzphase vorangeht, bestimmt wird durch

Erfassen erster Daten während der Lernphase, wobei die ersten Daten mit dem mindestens einen Zustand in dem überwachten Aufzug (3) korrelieren;
Erfassen weiterer Daten während der Lernphase, wobei die weiteren Daten mit dem mindestens einen Zustand in anderen Aufzügen (5) korrelieren; und
Bestimmen des normalen relativen Verhaltens des überwachten Aufzugs während der Lernphase basierend auf einem Vergleich der ersten Daten mit den weiteren Daten, die während der Lernphase erfasst werden;
wobei das Erkennen der Fehlfunktion in dem überwachten Aufzug (3) eine Analyse des aktuellen relativen Verhaltens im Vergleich mit dem normalen relativen Verhalten einschließt.

4. Verfahren nach einem der vorstehenden Ansprüche, wobei die weiteren Daten in anderen Aufzügen (5) erfasst werden, bei denen zuvor eine gewisse Ähnlichkeit mit dem überwachten Aufzug (3) festgestellt wurde.

5. Verfahren nach Anspruch 4, wobei die Ähnlichkeit zwischen dem überwachten Aufzug (3) und einem der anderen Aufzüge (5) in einer Lernphase, die der Einsatzphase, einschließlich des Erkennens der Fehlfunktion in dem überwachten Aufzug (3) vorangeht, bestimmt wird.

6. Verfahren nach Anspruch 5, wobei die Ähnlichkeit zwischen dem überwachten Aufzug (3) und einem der anderen Aufzüge (5) basierend auf mindestens einem von Folgendem bestimmt wird:

- Informationen in Bezug auf eine physische Distanz zwischen dem überwachten Aufzug (3) und dem anderen Aufzug (5),
- Informationen in Bezug auf eine Anwendung des überwachten Aufzugs (3) und des anderen Aufzugs (5) und

- Informationen in Bezug auf ein zeitliches Segment, in dem die ersten Daten und die weiteren Daten erfasst werden.

7. Verfahren nach einem der vorstehenden Ansprüche, wobei die ersten Daten basierend auf von Signalen erzeugt werden, die durch Sensoren (21) bereitgestellt werden, die in dem überwachten Aufzug (3) enthalten sind, und die weiteren Daten basierend auf Signalen erzeugt werden, die durch Sensoren (21) bereitgestellt werden, die in den anderen Aufzügen (5) enthalten sind.

8. Verfahren nach einem der vorstehenden Ansprüche, wobei die ersten Daten und die weiteren Daten mit mindestens einem von Folgendem korrelieren:

   - einer Anzahl von Türbewegungen, die während eines Zeitintervalls erfolgen,
   - einer Anzahl von Aufzugsfahrten, die während eines Zeitintervalls erfolgen,
   - einer Änderung der Kabinenbelegung, die während eines Zeitintervalls erfolgt,
   - Distanzen, die in einem Zeitintervall zurückgelegt werden,
   - einer Zeitspanne, die seit der letzten Fahrt vergangen ist und
   - der Zeitspanne, die seit der letzten Türbewegung vergangen ist.

9. Verfahren nach einem der vorstehenden Ansprüche, wobei das Verfahren in einer Aufzugssteuerung (33) ausgeführt wird, die mindestens eines von Folgendem empfängt:

   - Sensordaten, die durch eine Vielzahl von Sensoren (21) erfasst werden, die über den überwachten Aufzug (3) und eine Vielzahl der anderen Aufzüge (5) verteilt sind,
   - Steuerdaten, die in einer Aufzugssteuereinheit (19) des überwachten Aufzugs (3) generiert werden und Steuerdaten, die in einer Aufzugssteuereinheit (19) von mindestens einem einer Vielzahl der anderen Aufzüge (5) generiert werden.

10. Aufzugssteuerung (33), umfassend einen Datenprozessor (35) und eine Datenerfassungsschnittstelle (37), und die für eines von einem Ausführen, einem Durchführen und einem Steuern eines Verfahrens nach einem der vorstehenden Ansprüche konfiguriert ist.

11. Computerprogrammprodukt, umfassend computerlesbare Anweisungen, die, wenn sie durch einen Prozessor (35) einer Aufzugsteuerung (33) durchgeführt werden, die Aufzugsteuerung (33) auf eines von einem Ausführen, einem Durchführen und einem Steuern eines Verfahrens nach einem der Ansprüche 1 bis 9 anweisen.

12. Computerlesbares Medium, umfassend ein Computerprogrammprodukt nach Anspruch 11, das darauf gespeichert ist.

**Revendications**

1. Procédé de détection d'un dysfonctionnement dans un ascenseur observé (3) et exécuté, réalisé et/ou commandé par un dispositif de commande d'ascenseur (33) comprenant un processeur de données (35) et une interface d'acquisition de données (37), le procédé comprenant :

   l'acquisition de premières données au cours d'une phase d'application, les premières données étant en corrélation avec au moins une condition dans l'ascenseur observé (3) ;
   l'acquisition d'autres données pendant la phase d'application, les autres données étant en corrélation avec l'au moins une condition dans d'autres ascenseurs (5) ;
   **caractérisée en ce que** le procédé comprend les étapes suivantes :
   la détermination du fait que le comportement relatif actuel de l'ascenseur observé (3) pendant la phase d'application sur la base d'une comparaison entre les premières données et les données supplémentaires ; et la détection du dysfonctionnement de l'ascenseur observé (3) sur la base d'une analyse du comportement relatif actuel.

2. Procédé selon la revendication 1, dans lequel le dysfonctionnement à détecter est un blocage temporaire de l'ascenseur observé (3) et dans lequel les premières données et les autres données sont en corrélation avec les conditions d'un ascenseur affecté par le blocage temporaire de l'ascenseur.

3. Procédé selon l'une quelconque des revendications précédentes, dans lequel un comportement relatif normal de l'ascenseur observé (3) est déterminé dans une phase d'apprentissage précédant la phase d'application par

   l'acquisition de premières données pendant la phase d'apprentissage, les premières données étant en corrélation avec l'au moins une condition dans l'ascenseur observé (3) ;
   l'acquisition d'autres données pendant la phase d'apprentissage, les autres données étant en corrélation avec au moins une condition dans d'autres ascenseurs (5) ; et
la détermination du comportement relatif normal de l'ascenseur observé pendant la phase d'apprentissage sur la base d'une comparaison des premières données avec les autres données acquises pendant la phase d'apprentissage ;
dans lequel la détection du dysfonctionnement de l'ascenseur observé (3) comporte une analyse du comportement relatif actuel par rapport au comportement relatif normal.

4. Procédé selon l'une quelconque des revendications précédentes, dans lequel les données supplémentaires sont acquises dans d'autres ascenseurs (5) qui ont été préalablement déterminés comme ayant une certaine similitude avec l'ascenseur observé (3).

5. Procédé selon la revendication 4, dans lequel la similitude entre l'ascenseur observé (3) et l'un des autres ascenseurs (5) est déterminée dans une phase d'apprentissage précédant la phase d'application comportant la détection du dysfonctionnement dans l'ascenseur observé (3).

6. Procédé selon la revendication 5, dans lequel la similarité entre l'ascenseur observé (3) et l'un des autres ascenseurs (5) est déterminée sur la base de l'au moins une parmi

- des informations relatives à la distance physique entre l'ascenseur observé (3) et l'autre ascenseur (5),
- des informations relatives à une application de l'ascenseur observé (3) et de l'autre ascenseur (5), et
- des informations relatives à un segment temporel dans lequel les premières données et les données supplémentaires sont acquises.

7. Procédé selon l'une quelconque des revendications précédentes, dans lequel les premières données sont générées sur la base de signaux fournis par des capteurs (21) situés dans l'ascenseur observé (3) et les autres données sont générées sur la base de signaux fournis par des capteurs (21) situés dans les autres ascenseurs (5).

8. Procédé selon l'une quelconque des revendications précédentes, dans lequel les premières données et les autres données sont en corrélation avec au moins l'un parmi

- un nombre de mouvements de porte survenant pendant un intervalle de temps,
- un nombre de déplacements d'ascenseurs survenant au cours d'un intervalle de temps,
- un changement dans l'occupation de la cabine survenant au cours d'un intervalle de temps,

- les distances parcourues pendant un intervalle de temps,
- le temps écoulé depuis le dernier voyage, et
- le temps écoulé depuis le dernier mouvement de la porte.

9. Procédé selon l'une quelconque des revendications précédentes, dans lequel le procédé est exécuté dans un dispositif de commande d'ascenseur (33) recevant au moins l'un parmi

- des données de capteurs acquises par une multiplicité de capteurs (21) répartis dans l'ascenseur observé (3) et dans une multiplicité d'autres ascenseurs (5),
- des données de commande générées dans une unité de commande d'ascenseur (19) de l'ascenseur observé (3) et des données de commande générées dans une unité de commande d'ascenseur (19) d'au moins l'un parmi les nombreux autres ascenseurs (5).

10. Dispositif de commande d'ascenseur (33) comprenant un processeur de données (35) et une interface d'acquisition de données (37) et configuré pour exécuter, réaliser et commander un procédé selon l'une quelconque des revendications précédentes.

11. Produit de programme informatique comprenant des instructions lisibles par ordinateur qui, lorsqu'elles sont exécutées par un processeur (35) d'un dispositif de commande d'ascenseur (33), ordonnent au dispositif de commande d'ascenseur (33) d'exécuter, de réaliser et de commander un procédé selon l'une quelconque des revendications 1 à 9.

12. Support lisible par ordinateur comprenant un produit programme informatique selon la revendication 11 stocké sur celui-ci.

Fig. 1

EP 3 814 263 B1

# Fig. 2

**EP 3 814 263 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20170126821 A
- WO 2016091309 A1
- WO 2009126140 A1